# EUROPEAN PATENT SPECIFICATION

(11) **EP 3 898 418 B1**
(45) Date of publication and mention of the grant of the patent: **18.09.2024**
(21) Application number: 19821191.4
(22) Date of filing: 09.12.2019
(51) Int. Cl.: B60P 7/08, B60P 7/13, G01G 19/12, B64F 1/32, B64F 1/36

(54) **TRANSPORT SAFETY SYSTEM**
TRANSPORTSICHERHEITSSYSTEM
SYSTÈME DE SÉCURITÉ DES TRANSPORTS

(30) Priority: 21.12.2018 GB 201821134; 06.02.2019 GB 201901664
(43) Date of publication of application: 27.10.2021
(73) Proprietor: Richmond Design and Marketing Limited, Coventry CV3 1JL (GB)
(72) Inventor: KEENE, David, Coventry Warwickshire CV3 1JL (GB); BREWERTON, Simon, Coventry Warwickshire CV3 1JL (GB)
(74) Representative: Barker Brettell LLP
(86) International application number: PCT/GB2019/053477
(87) International publication number: WO 2020/128429

(56) References cited:
- EP-A2- 1 253 079
- WO-A1-2018/017053
- US-A1- 2008 083 851
- US-A1- 2016 244 184
- US-A1- 2018 061 243
- US-A1- 2018 257 446
- MANFRED SCHULZE: "Übersicht am Airport - DVZ", DEUTSCHE VERKEHRS-ZEITUNG, 16 October 2018 (2018-10-16), XP055662176, Retrieved from the Internet <URL:https://www.dvz.de/rubriken/luft/detail/news/uebersicht-am-airport.html> [retrieved on 20200127]
- BLUMENBECKER GROUP: "Smart Dolly Is Calling", 27 April 2018 (2018-04-27), XP055662181, Retrieved from the Internet <URL:https://www.blumenbecker.com/fileadmin/blumenbecker/downloads/SOLUTIONS-2018-EN.pdf> [retrieved on 20200127]

## Description

### TECHNICAL FIELD

The present invention relates to an airside dolly and a driven vehicle, a vehicle train, a transport safety system, a method of triggering a shutdown or immobilisation of a driven vehicle, and method of retro-fitting an airside dolly of an airside dolly and a driven vehicle. Examples disclosed herein relate to status monitors for dollies, and particularly but not exclusively to airside dollies, such as baggage dollies and cargo dollies, transport safety systems, methods for monitoring an airside dolly, methods for retro-fitting an airside dolly to improve its safety, and methods for improving safety when transporting cargo and baggage in an airport environment.

### BACKGROUND

The risk averse nature and long lead and development times associated with the aviation industry mean that minimal changes have been made to the infrastructure associated with airports. This is despite the amount of cargo and passengers passing throughout airports having more than doubled in the last thirty years.

The systems and vehicles involved with the transport, transfer and loading of baggage and cargo have remained predominantly unchanged. Many of the systems are therefore mechanical and manual in nature.

Such systems leave room for human error, and carry a risk of damage occurring to baggage, cargo, airside vehicles or even the planes and terminal themselves. There is also a risk of injury of personnel, and in the worst cases risk to human life.

It is an aim of the invention to solve at least some of the problems associated with the prior art and to improve the safety of airside transport systems.

WO2018017053 discloses a system including a central controller and a plurality of vehicles. The central controller includes a memory and a processor. The vehicles are in communication with and separate from the central controller, and each vehicle includes a platform and a controller including a memory and a processor. The central controller is programmed to receive an input associated with an object and transmit a destination to the vehicle based on the input. The vehicle is programmed to receive an object on the platform and navigate to the destination.

"Overview at the airport", DVZ, 16 October 2018, discloses a system of dollies equipped with sensors, including loading, occupancy, and GPS sensors, to determine whether the dollies are loaded or empty, whether they are moving or disconnected, and the location of the dollies.

"Smart Dolly Is Calling", Blumenbecker Group, 27 April 2018, discloses a system of dollies. Each dolly is equipped with sensors which record the position of the dolly, whether it is parked-up or coupled to a tractor, and whether it has a payload or is empty. This information is transmitted to a central control station.

US2016244184 discloses a system and method of operating a checked bag reconciliation area of an airport. The method includes transporting a luggage item from an entrance mechanism to one of a plurality of inspection stations. Once the luggage item is at the inspection station, the method proceeds by conducting an inspection of the luggage item by the agent at the inspection station. The step of transporting the luggage item includes transporting the luggage item to the inspection station with the luggage item disposed on an automatic material handling device, and the step of conducting an inspection of the luggage item by the agent includes conducting the inspection of the luggage item while the luggage item is disposed on the automatic material handling device.

US2008083851 discloses a method for transferring airplanes and an unmanned airplane transfer system. The airplane transferring system includes: receiving a transfer signal responsive of a movement of an airplane control component; and transferring an airplane, by an unmanned airplane transfer system, in response to the transfer signal.

US2018061243 discloses air traffic management software running on a workstation connected on a network with Airport Management Software to allow flow control and network operations personnel to visualize and manage overall airport flow capacity, halt all ground-traffic, departures and arrivals, either by data entry, mouse or by hand gestures.

According to its abstract, US2018/257446 A1 discloses a dolly, a dolly towing system and a method of operating a dolly towing system. The dolly includes a wheeled platform with a coupled electric generator and an automated safety interlock assembly. The interlock assembly includes one or more sensors configured to wirelessly detect whether the dolly and tow motor are safely joined to one another. A controller can be powered by a battery or related onboard source of electric current while the dolly or system are stationary, as well as by the generator when the dolly or system are moving. Signals indicative of the joining that are acquired from the sensors can be received and processed by the controller such that suitable circuitry can convey the processed signal in such a way that the signal provides an audible or visual notice of an operational status of the dolly or system to an operator.

According to its abstract, EP1253079 A2 discloses an air cargo transport system employing a tow vehicle that can automatically follow and run upon guide lines. The tow vehicle can tow cargo laden equipment such as container dollies to thereby automatically transport the air cargo.

### STATEMENTS OF INVENTION

According to an aspect of the invention there is provided an airside dolly and a driven vehicle according to claim 1.

According to an example not covered by the presently claimed invention, there is provided a status monitor for an airside dolly, the status monitor comprising: a sensor and an output. The sensor may be configured to sense a safety variable of the airside dolly. The output may be in communication with the sensor and configured to provide a status signal in dependence on the sensed safety variable of the airside dolly.

A safety variable is any detectable criteria that may affect the safety of any person in any way. For example loose cargo and baggage can become hazardous as if they fall they may strike an individual or become detritus that could interfere with vehicles, whether ground support equipment or aircraft, in an airport environment. Various other safety variables are considered in the examples and embodiments below; these are not an exhaustive list however and other safety variables may also be applicable. Being able to sense and provide an output in dependence on the detection of a safety variable of an airside dolly provides the means to enact various improvements in safety in the operation of the airside dolly and its associated systems. As well as improving safety it can also improve efficiencies of the systems due to reduced downtime and earlier identification of errors, fault equipment, potential hazards and the like.

The safety signal may be provided to an operator or controller. The operator or controller may be a human or operator or controller or could be an automated controller or operator. The status signal may be routed via a further status monitor or other routes rather than being sent directly to the operator or controller.

The sensor may be a sensor for sensing the retention status of cargo carried on the airside dolly. The sensor may be a clamp sensor. The clamp sensor may be configured to sense a clamping status of a clamping system of the dolly, the clamping system being adjusted to clamp a container releasably to the dolly for transport of the container with the dolly. The safety variable may therefore be whether the clamping system is in a clamped position. This allows the status monitor to determine whether an object situated on top of the dolly is clamped down. The object may be a unit load device (ULD). A ULD is a specially designed cargo solution used in air transportation. A ULD is a light weight container that often has a form configured to fit within a fuselage of an aeroplane. They are therefore lightweight and generally enclosed boxes. Identification means (such as a barcode) are often included on an external surface of the ULD such that at least its destination can be determined. ULDs are configured to be transported within a plane and also configured to be transported around the airport on top of, and secured to, an airside dolly. Ensuring that a ULD, or other object, is clamped down on top of the dolly prevents accidents that may occur due to the ULD becoming dislodged and falling from the dolly.

Other retaining means and associated sensors are envisaged which may either replace or complement the clamping system and the clamping sensors. For example a latching system and a respective latching sensor may be used. A latching system typically makes use of two components, in the case of a dolly, one on the dolly and one on the ULD/cargo. An example of a latching system may be a deadbolt and a strike plate. In some definitions a clamp and a base of a ULD which the clamp engages with may be considered a clamping system.

The sensor may comprise a coupling sensor. The coupling sensor may be configured to sense a coupling status of the dolly. In other words the coupling sensor may be configured to sense whether the dolly is coupled to another dolly or a driven vehicle (e.g. a tug) or whether another dolly is coupled to it. The safety variable may therefore be whether the dolly is coupled to another dolly or driven vehicle. More specifically, the safety variable may be whether the dolly is coupled when it is determined that another dolly is in a coupling position, proximal to the dolly. Decoupling can be a hazard in that it can leave following dollies in places where they may become obstructions, or even freewheel to more hazardous locations. Determining that a dolly is uncoupled, or that it has become uncoupled therefore allows for preventative action to be taken, e.g. ensuring coupling before moving, or corrective action to be taken, e.g. recoupling of the decoupled dolly or retrieval of the decoupled dolly. Various towing vehicles may be used in airside environments. The towing vehicles described herein may be tugs, and that term is predominantly used for brevity, but may also be 4x4 vehicles, utility vehicles, tractors, trucks, or any other ground vehicle capable of towing.

The sensor may comprise a weight sensor. The weight sensor may be configured to sense a weight of a ULD, or other object, and its contents on top of the dolly. More specifically the weight sensor may be configured to sense a change in the weight of a ULD and its contents on top of the dolly. The safety variable may therefore be whether a change in weight is determined. A change in weight is indicative (if a reduction in weight) of some cargo or baggage being lost from the ULD. Being able to sense whether baggage or other cargo has been lost from on top of the dolly provides a means for preventing baggage or other cargo being lost and potentially causing a hazard airside. Once it is determined that a bag has fallen off a dolly, steps can be taken to retrieve it, The faster it is realised that a bag has fallen off the faster it can be retrieved, and the safer the environment. It also may provide a means to ensure that all baggage or other cargo makes it to its designated destination, and on the correct aircraft, as dropped baggage may be lost or redirected in systems and methods associated with the prior art.

The sensor may comprise a proximity sensor. The proximity sensor may be configured to sense an object in proximity to the dolly. In this sense an object is inclusive of a person or other living organism. The safety variable may therefore be whether an object is in proximity to the dolly. Sensing whether an object is in proximity to the dolly provides for the safety of the object, particularly when said object is a person, and also the dolly and any operators associated with it or the driven vehicle towing it. As well as being able to walk around the sides of the dolly an individual is able to walk between dollies in a train. This may occur during loading the dollies. Whilst systems and methods of the prior art may rely on instruction and education to try and prevent walking between dollies there is still room for user error. Providing a proximity sensor allows for the automatic detection of a person who may be injured should the dolly begin to move.

The output may be configured to provide the status signal over a local connection. A local connection is any connection made between proximal locations. In these cases it may be defined as being in the region defined by a vehicle train to which the airside dolly belongs. The local connection may be a directional connection. A directional connection is a connection that uses connection means that may be focused in a specific direction. Focusing the connection in a specific direction reduces or prevents occurrences of status monitors connecting to status monitors, vehicles, or other systems not also comprised within a vehicle train of which dolly of the status monitor is comprised within - i.e. "cross talk". The local connection may be made over at least one of an electromagnetic wave based communication system (such as a light based communication system or a radio frequency (RF) based communication system) and a wired connection (for example connectable via a plug and socket). The light based communication system may be an infra-red communication system. Other optical or otherwise light based connection systems may also be used. Wired connections may also be configured to provide power between dollies or between a towing vehicle and a dolly.

Using a light based communication system, as opposed to radio wireless networking technologies such as Wi-Fi (RTM), avoids interference with the various radio waves and other long wave communication types that are commonly used in airport locations. This prevents mistakes in the communication and also improves safety in reducing the chance of interfering with existing airside communications.

Using a light based communication system also avoids the requirement for a physical connection between the dollies/dolly and tug, as would be required over a wired communication system, thereby allowing communication to be transferred between dollies, without an airside operative being required to make additional connections to those that are currently made in known systems i.e. the clamping of the ULD to the dolly and the coupling of the dollies to one another/a towing vehicle.

Providing a local connection enables the dolly to communicate with other dollies or a towing vehicle (e.g. tug) proximal to it. Communicating locally to another system allows the status monitor to be fitted with a slave unit which is operable to communicate with a master telemetry unit comprised within the towing vehicle. This keeps the cost and complexity of the status monitor low and therefore the cost and complexity of the dolly itself. The power demand of the status monitor is also less than if it was equipped with communication means for communicating at a greater distance.

The status monitor may further comprise a communication input.

The communication input may be configured to receive a status signal from the output of another status monitor.

Having a communication input may provide a means by which the status monitor may receive signals from other devices or systems, in particular another status monitor. The further status monitor may be configured in an identical way to the subject status monitor. The status monitor may be fitted (or be configured to be fitted) on to its own, respective dolly, i.e. a further dolly. The further status monitor may thereby be able to provide a further status signal with regards to its own dolly to the status monitor, which may receive the signal via the communication input.

The status signal may be configured to trigger a warning in dependence on the safety status of the airside dolly. The warning may be an audible warning, a visual warning, a haptic warning, or any combination of the above. The warning may be provided to any one or more of a driver of a driven vehicle of a train to which the dolly belongs, a control or command centre, and a mobile device.

The warning may be modified in dependence on the intended audience. For example, a driver of a tug that may be towing the dolly may be subject to various vibrations associated with driving a vehicle; it may, therefore, be more suitable to provide an audible and visual warning. As the environment may be loud the audible warning may be configure to be heard above a background noise or through ear defenders. The driver may have earphones, and the speakers in the earphones may receive and output the audible warning to the driver. The visual warning may be a light or display in a cab of the driven vehicle, or in a control room, or on a mobile device.

Providing a warning may allow for an intervention into the situation by a driver, controller or other personnel in the event of a safety variable being sensed. The intervention may be rectifying the cause, further diagnosing the cause or requesting further assistance. For example, if a baggage or piece of cargo has been dislodged from the ULD, or otherwise fallen off the dolly, then the warning may alert the driver of the tug associated with the dolly. The driver can then stop the tug and recover the baggage, or make a call to have the cargo recovered by another operator. In another alternative, the change in weight seen by the sensor triggers an automatic signal sent to a remote monitoring station, such as a command station at the airport, which could enable a baggage retrieval process to be initiated even if the driver does not contact the command station. The command station could commission another baggage retrieval vehicle to go and get the dropped bag, or contact the driver and ask them to get it.

The status signal is configured to trigger a vehicle shutdown or immobilisation in dependence on the safety status of the airside dolly. For example, if a ULD is not properly clamped down onto the dolly, the safety status signal may prevent the tug associated with the dolly from operating. And/or, if a proximity sensor senses a person between a tug and coupled dolly, or between a pair of coupled dollies associated with the tug, the tug may be prevented from operating.

Immobilising or shutting a vehicle down may prevent any further movement of the vehicle which may be towing the dolly (or may be the dolly itself). Preventing any further movement may prevent a worsening of the situation or may prevent an unpermitted action being taken. Examples of unpermitted actions may include moving the dolly with an unsecured ULD, leaving lost cargo or baggage on the ground, moving an improperly coupled or uncoupled dolly, and moving the dolly with a person or obstacle in close proximity to the dolly.

The vehicle may be a tug towing the airside dolly.

According to an example not covered by the presently claimed invention, the vehicle may be the airside dolly. The status monitor may be configured to be retro-fitted to a dolly. Some containers have nets, some open sides (possibly with a curtain), some solid sides and a solid top,

According to another example not covered by the presently claimed invention, there is provided an airside dolly comprising the status monitor of the preceding example.

The status monitor may be integrally formed or manufactured with the dolly during the dolly manufacture. Alternatively, the dolly may be retrofitted with the status monitor.

The dolly may further comprise a control system, wherein the control system is configured to receive the status signal and modify a state of operation of the dolly in dependence on the status signal.

According to another example not covered by the presently claimed invention, there is provided a vehicle train comprising the dolly according to the preceding example. A vehicle train is a group of vehicles that follow each other, for example joined by articulated joints (or maybe self-guided self-driven vehicles that are not physically connected together but which nevertheless follow each other). A simplest implementation of a vehicle train is a first vehicle and a second, towed vehicle. The vehicle train may comprise a driven vehicle, such as a tug, and at least one dolly.

According to another aspect of the invention there is provided a vehicle train according to claim 7.

The status signal may be output to a tug and/or a further dolly comprised within the vehicle train.

According to another example not covered by the presently claimed invention, there is provided a transport safety system comprising the status monitor of the preceding example. The transport safety system may further comprise a terminal. The terminal may be configured to receive the status signal and output at least one of a warning, a report signal and a control signal in dependence on the status signal.

According to another aspect of the invention there is provided a transport safety system according to claim 8.

The transport safety system may comprise a plurality of status monitors fitted to, or comprised within, a plurality of respective dollies.

The terminal may comprise a status alert system.

The status alert system may be configured to provide at least one of a visual indicator and an audible indicator in dependence on the or each status signal.

The transport safety system may further comprise an override. The override may require an authentication.

The override may allow an authorised user to override a shutdown or immobilisation resulting from a status signal. The user may be authorised through the provision of a key or code which may be input into the transport safety system via an input in the terminal. Remote overrides may also be used, such as from a command or control centre. Once overridden the transport system may be configured to place the tug, dolly or other driven vehicle, into a reduced state of operation. The reduced state may comprise a reduced maximum vehicle velocity.

According to another example not covered by the presently claimed invention, there is provided a method of monitoring the status of an airside dolly, the method may comprise: sensing a safety variable of the airside dolly, and outputting a status signal in dependence on the sensed safety variable.

According to another aspect of the invention there is provided a method of triggering a shutdown or immobilisation of a driven vehicle according to claim 12.

According to another example not covered by the presently claimed invention, there is provided a method of retro-fitting an airside dolly to improve its operational safety, the method may comprise: fitting a sensor and a communication output means to the dolly. The sensor may be configured to sense a safety variable of the airside dolly. The communication output means may be configured to be in communication with the sensor and may be further configured to output a status signal in dependence on the sensed safety variable of the airside dolly.

According to another aspect of the invention there is provided a method of retro-fitting an airside dolly of an airside dolly and a driven vehicle according to claim 13.

According to another example not covered by the presently claimed invention, there is provided a method of improving the safety of transporting baggage and cargo in an airport environment, the method may comprise: sensing a safety variable of the airside dolly, and outputting a status signal in dependence on the sensed safety variable.

### BRIEF DESCRIPTION OF THE DRAWINGS

The invention will now be described, by way of example only, with reference to the accompanying figures, in which:
Figure 1A shows a simplified side view of a dolly - ULD assembly of the prior art;
Figure 1B shows a simplified front view of the dolly - ULD assembly of the prior art shown in Figure 1A;
Figure 2A shows a further simplified side view of the dolly - ULD assembly of the prior art shown in Figure 1A;
Figure 2B shows a simplified front view of a dolly - ULD assembly of the prior art shown in Figure 1A;
Figure 3 shows a simplified side view of a dolly - ULD assembly comprising a status monitor;
Figure 4 shows a simplified side view of a dolly - ULD assembly comprising a status monitor;
Figure 5 shows a simplified side view of a dolly - ULD assembly comprising a status monitor;
Figure 6 shows a simplified side view of a dolly - ULD assembly comprising a status monitor;
Figure 7 shows a block diagram representation of a status monitor;
Figure 8 shows a block diagram representation of a status monitor;
Figure 9 shows a block diagram representation of a transport safety system;
Figure 10 shows a tug-dolly train showing zero faults;
Figure 11 shows a tug-dolly train showing one type of fault;
Figure 12A shows a tug-dolly train showing another type of fault;
Figure 12B shows a tug-dolly train showing another type of fault;
Figure 13 shows a tug-dolly train showing another type of fault;
Figure 14 shows a tug-dolly train showing another type of fault;
Figure 15 shows a status indicator displaying an ok status of a transport safety system;
Figure 16 shows a status indicator displaying an error status of a transport safety system; and
Figure 17 shows schematically a driver of a tug in the cabin of a tug and a visual warning system.

### DETAILED DESCRIPTION

### The dolly

The systems and methods described herein are for use with airside dollies. Airside dollies are a type of ground support equipment used in airports and are required to be operated in both internal and external environments, within terminals and hangars and on the airfield itself. Various airside dollies may be used in dependence on the intended goods for transportation.

Airside dollies comprise various types of dollies; the two most common types are cargo dollies and baggage dollies, with each type available in various configurations. Baggage dollies are typically smaller than cargo dollies and may be configured to carry a ULD (or other container system) or be configured as a cart, with raised sides to form a containing portion, and not usable with a ULD, for example a cage with open or openable sides, possibly closed with a curtain. In both configurations the baggage dolly is configured to carry passenger baggage. In the ULD carrying configuration baggage is loaded into the ULD, which is retained on to the top of the baggage dolly. In the cart configuration baggage is loaded onto the dolly itself, within the contacting portion.

Cargo dollies are typically larger than baggage dollies and may be configured to carry a wider array of goods. ULDs may still be used with cargo dollies, although the cargo dolly will typically be able to carry two or more ULDs at a time. Loose fitting, or oddly shaped cargo may also be more readily used with cargo dollies. Hook points and similar may be provided on the cargo dolly to allow for strapping, netting, webbing or other retaining means to be used to secure cargo on top of the cargo dolly.

The status monitor described below is configured to sense a safety variable associated with a dolly and provide an output in dependence on the sensed safety variable. Various safety variables are considered and the examples look at them individually for simplicity. In many embodiments all, or at least a selection of, the various safety variables are considered by the status monitor. The status monitor therefore comprises a sensor for sensing at least one of the safety variables, and often sensors for sensing different safety variables, and possibly for sensing all of the safety variables disclosed.

### The clamp sensors

One safety variable is whether a ULD is securely clamped, or otherwise retained, to the dolly.

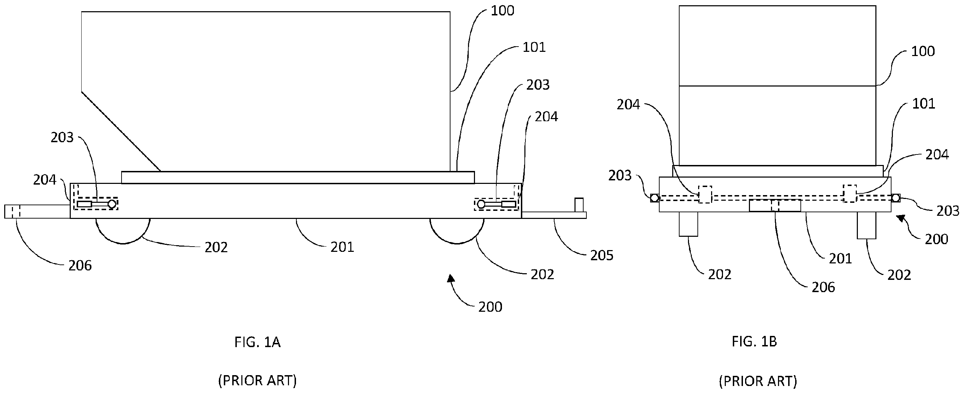

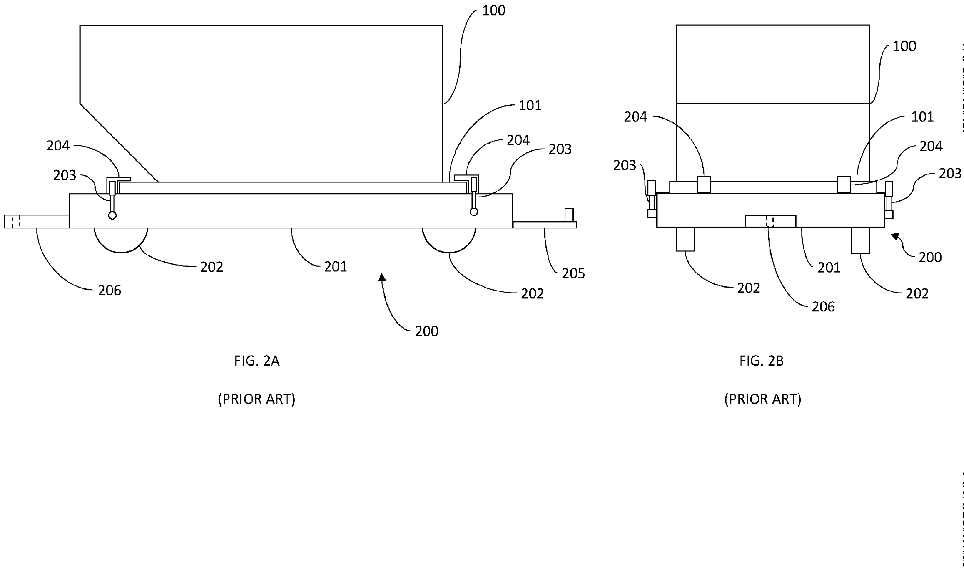

Many airside dollies comprise manually operable clamping means that retain the ULD to the dolly. The clamping means are actuated by a lever. Usually there is a clamping means at the front of the dolly and a clamping means at the rear of the dolly, each clamping means actuated individually and manually by a respective lever once the ULD is in place. Figures 1A, 1B, 2A and 2B show a simplified example of a clamping mechanism of the prior art in use with a dolly - ULD assembly. Figures 1A and 1B show a ULD 100 in place on top of a dolly 200 but unclamped. Figures 2A and 2B show the ULD 100 clamped in place on top of the dolly 200. The dolly comprises a chassis 201 and a plurality of wheels 202. The chassis 201 is configured, on a top surface, to receive a ULD 100. Locating features (not shown) may be used on the chassis 201 to locate the ULD into a clamping position. A clamping system is provided on the dolly 200, the clamping system comprising a pivotable clamp 204 and a lever 203 for actuating the clamp. In order to clamp the ULD 100 to the dolly 200 an operator applies a force to the lever 203 to rotate the clamp into position such that it clamps down on a base 101 of the ULD 100.

The ULDs are often not routinely serviced, and are subject to multiple, repetitive forces through being clamped and transported. These forces can cause the ULD 100 and its base 101 to warp or bend which in turn can result in a poor fit of the ULD 100 on top of the dolly 200. ULDs are flown in aircraft and so are designed to be light. This also means that they are susceptible to being bent or distorted. If a damaged ULD is used then excessive forces may be required to actuate the clamp 204 via the lever 203, or even making it physically impossible to rotate the clamp into place. In these circumstances the operator is supposed to retire the ULD from the usable stock and seek a replacement. However, due to the time constraints in place in an airport environment an operator may instead choose to risk transporting the ULD without it being properly retained by the clamping mechanism. It may be the case that the operator believes the clamping procedure has been completed, but in reality the forces were not great enough and the procedure has not been completed, such that the clamp is not fully engaged. A clamp that is not fully engaged may vibrate loose during movement. In such situations, should the dolly be moved with the unclamped ULD on it, there is a risk of the ULD falling off the dolly. This not only risks damage to the dolly, ULD, the contents of the ULD and facilities but can also lead to injury or even death should the ULD strike someone as it falls off. The ULD can also hit and cause damage to an aircraft.

A fully laden ULD can have a mass of around 1,500 kg and therefore is capable of causing damage or injury once separated from the airside dolly. Moreover, it can be difficult to recover a separated ULD. In the case of an empty ULD, which may weigh 60 to 70 kg, the ULD may, for example, be blown by high winds, again causing a safety and recovery issue. It has long been desired not to have ULDs fall off dollies.

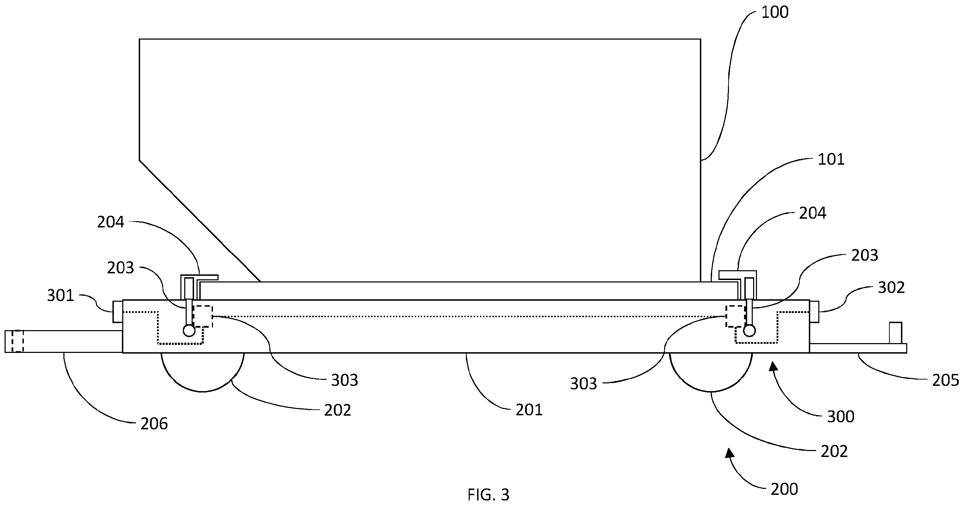

Figure 3 shows a dolly 200 and ULD 100 assembly, wherein the dolly 200 further comprises a status monitor 300. The status monitor 300 is configured to sense a clamping status based on the clamp 204 position and provide an output signal in dependence on the clamping status. The clamping status is sensed by a clamp sensor 303. The clamp sensor 303 comprises an absolute rotary encoder mounted to the axle upon which the clamps are mounted. The clamp sensor is configured to transmit a positive signal only when the clamps are in a fully clamped position. In the example of figure 3 this is when the levers 203 are in a vertical orientation. Various other sensor types and sensing methodologies are envisaged, such as the use of a potentiometer, or contact sensors such as a piezoelectric sensor that could be used to sense when the lever 203 or clamp 204 makes contact with a bump stop (not shown), indicating that it is fully engaged. Each clamp (or set of clamps where there is multiple clamps on a single axle such as in this example) has its own clamping sensor. In this way every clamp can be monitored to ensure that it is fully engaged. The clamp sensor is in electronic communication with an output 301. The output 301 is a transmitter.

In some examples the dolly comprises an automatic locking system for automatically clamping the ULD to the dolly. For example, the locking system may include sensors that detect the presence of a ULD and initiate the application of locking or retaining means, for example clamps or latches (or a human operator may activate the automatic clamping of a dolly, for example by pressing a button). The processor may process information received from the locking system and may initiate automatic locking of the locking system. The locking system may be mechanical, for example using a sprung latch mechanism. A mechanical locking system may be enabled to lock as soon as locking formations on the airside dolly are aligned with corresponding locking formations on the ULD or other cargo.

In this way, the ULD may be prevented from sliding or moving relative to the airside dolly, or falling off the airside dolly during use, without requiring the intervention of any operator.

Sensors for detecting the ULD may be included with or without the incorporation of the automatic locking system.

The sensors may be configured to determine an identity of the ULD as well as a generic presence of the ULD. The sensors may comprise barcode scanners or similar, configured to scan a barcode or other identifying portion on the ULD.

Although the clamping system of the depicted examples comprises a series of four clamps 204 around the ULD 100, the clamping system may be provided such that it is designed to lock onto whatever cargo is present on the cargo portion. For example, a greater or lesser number of clamps 204 may be provided, depending on the specific requirements of the cargo to be secured. Moreover, the location of the clamps 204 may be adapted for a specific size of shape of cargo. The clamps 204 may also be movable in order that different shapes and/or sizes of cargo can be secured to the dolly 200.

Other sensors may be used for ascertaining a retention status of carried cargo. For example, in systems in which a dolly is carrying an atypical load, which requires strapping or webbing down, then sensors configured to sense a tension in the strapping or webbing may be used.

In another example a webbing system is provided for use with the clamping system. The webbing system comprises a webbed frame in which a webbing portion is contained within a frame portion. The frame may be a fully enclose, four-side frame, or may comprise a parallel pair of frame members, with each member of the pair of frame members attached at opposite edges of the web. The webbed frame may be placed over a cargo, the cargo being placed on top of the dolly. The frame may then be clamped down to the dolly, with the webbing tension against the cargo providing retention. The webbing may be elasticated. The frame may have clamping sensors.

### The weighing sensors

Another safety variable is whether the cargo or baggage is being retained during transport within the ULD 100 (or other transport/storage container). The status monitor 300 therefore in some embodiments comprises a means for detecting change in weight of the cargo.

Some ULDs, or dollies incorporating baggage containers, may be open sided or open topped. If cargo or baggage is not secured correctly, or possibly if cargo or baggage is overfilled in the ULD or container, then there is a risk of said cargo or baggage being dislodged from the ULD 100 or dolly 200. As well as causing inconvenience to the owner of the cargo or baggage there is also a risk of damage or injury through the cargo or baggage falling on someone, or if it becomes detritus that may be run over or otherwise negatively interact with ground support equipment or even the aircraft whilst taxiing.

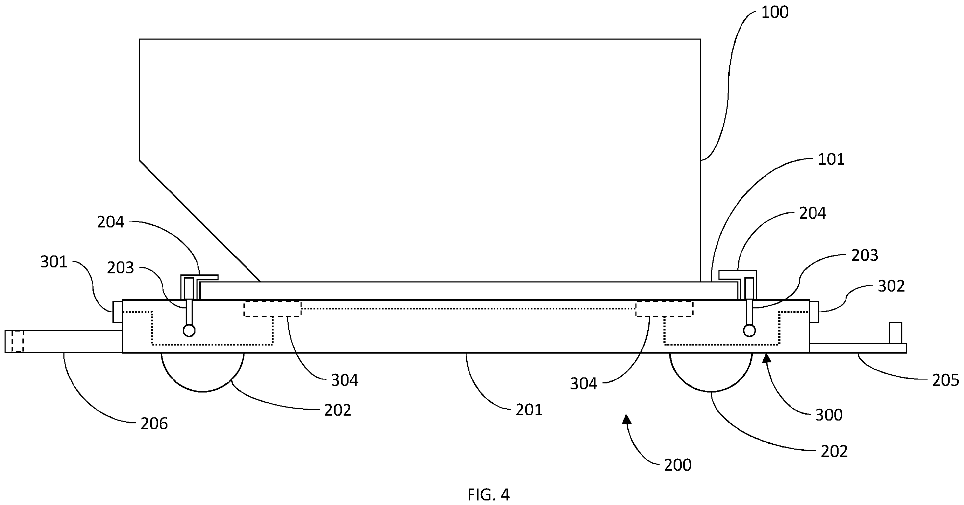

Figure 4 shows a dolly 200 and ULD 100 assembly, wherein the dolly 200 further comprises the status monitor 300. The status monitor 300 is configured to sense a weight of whatever is being transported on top of the dolly. In this example it is the weight of the ULD 100 and its contents being measured; as discussed above, in other configurations it could be the contents being transported in a cage or other container either attached integrally or clamped to the dolly 200. The weight is sensed using a weight sensor 304 or plurality of weight sensors. The weight sensor 304 is a load cell. The weight sensor 304 has an operating range of 0kg to 2000kg. Other ranges may be used that have a higher upper limit in dependence on the use case. As ULDs predominantly have a 1,500 kg maximum loading weight then an upper limit is set in excess of this. ULDs have a mass of approximately 70kg. In some examples the precision of the weight sensor has a granularity of 1kg. In other examples the granularity may be higher or lower, and may be set in dependence on the use case. For example, if the expected cargo consists of many smaller items, then a finer granularity may be used in order to detect the loss of objects of less than 1kg. The weight sensor 304 is a dynamic weight sensor, such that it can detect changes in weight. In some examples the weight is sensed using a plurality of weight sensors. The weight sensors, which can be in the form of loads cells, may be placed at spaced apart locations within the plan area of the dolly, for example at each of the four corners of the dolly. This allows a weight distribution to also be measured as well as providing a more accurate measurement over using a single cell.

The status monitor 300 is configured to record a weight once the ULD 100 is fully loaded. If that weight should decrease during transport or otherwise the status monitor 300 will trigger a status signal indicative that there has been a weight change to be sent via the output 301.In some examples the status monitor is configured such that it can determine whether a single item has been dropped or whether multiple items have been dropped. For example, in baggage transport applications, an average baggage weight may be stored in a memory of the status monitor 300, and a change in weight can then be divided by the average weight in order to determine an estimated number of lost bags. In some examples the status monitor may also estimate the number of lost bags in dependence on the timing of the weight changes.

The status monitor 300 may also be configured to determine whether a maximum loading limit has been exceeded and provide a status signal in dependence on said determination. The maximum loading limit may be configurable in dependence on use case; an example loading limit applicable to some ULDs is 1,500kg.

### The coupling sensors

Another safety variable is whether the dolly 200 is securely coupled to a preceding or following dolly or tug when the dolly 200 is comprised within a vehicle train. Coupling may refer to a mechanical coupling or a communication coupling or both.

Airside dollies comprise a forward coupler 206 and a rearward coupler 205. The forward coupler 206 is configured for the dolly 200 to be coupled to a preceding dolly or tug. The rearward coupler 205 is configured for a following dolly to be likewise coupled to the dolly 200. Figures 1A, 1B, 2A and 2B show a simplified example of the forward coupler 206 and the rearward coupler 205 of the prior art in place on the dolly 200. Each coupler 205, 206 comprises a respective corresponding attachment point. In this example the rearward attachment point is female and the forward attachment point is male. Conceivably these may be reversed in other examples.

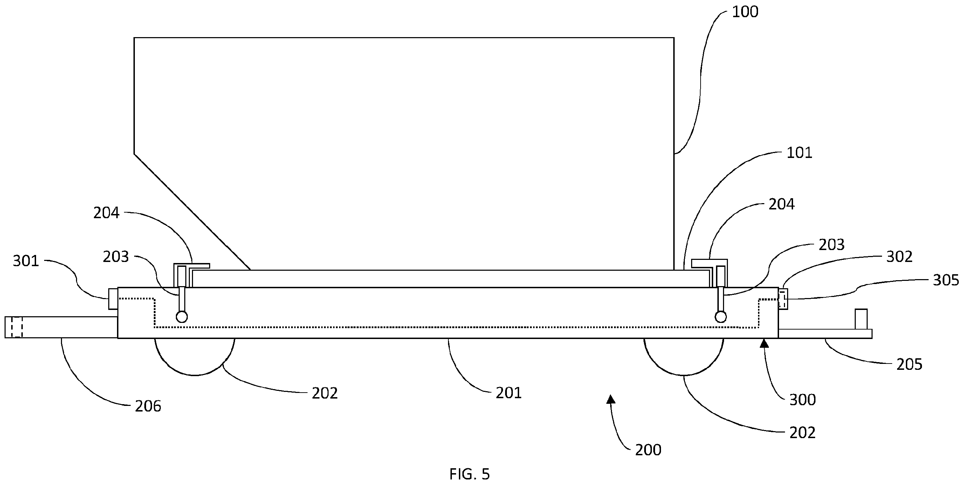

Figure 5 shows a dolly 200 and ULD 100 assembly, wherein the dolly 200 further comprises the status monitor 300. The status monitor 300 is configured to determine whether a further dolly is connected to the dolly 200 via the rearward coupler 205. The status monitor comprises a coupling sensor 305. The coupling sensor 305 is configured to sense the presence of a further dolly rearward of the airside dolly 200. The coupling sensor 305 comprises a communication receiving means, configured to receive a signal output from a transmitter mounted on the further dolly. When coupled, the coupling sensor 305 is aligned with the transmitted mounted on the further dolly, such that signal can be sent from the transmitter to the coupling sensor 305. Should the coupling sensor move out of range of the transmitter, or otherwise lose its connection (such as if the plug is disconnected from the socket in a wired system), then this is indicative of a communication decoupling, which may also be indicative of a mechanical decoupling. For example, if a communication coupling is lost then this may be due to a faulty communication system (e.g. a faulty transmitter 301 or receiver 302), or it could be due to a mechanical decoupling resulting in the dollies going out of range from one another, or a plug being pulled from a socket in a wired connection.

In some examples the receiver 302 performs the function of the coupling sensor 305. In other words, the coupling sensor 305 is the same component as the receiver 302. Receiving a status signal from a status monitor of the further dolly indicates that the further dolly is in a coupled position with the airside dolly 200. Should the status signal from the further dolly be lost then this is indicative of a decoupling.

In other examples the coupling sensor 305 is located in or on the rearward coupler 205. In these examples the coupling sensor 305 is a load cell or component having a similar function. The coupling sensor 305 is configured to determine whether a forward coupler 206 of a further dolly is correctly connected to the rearward coupler 205 of the dolly 200. If the coupling sensor determines a load above a threshold then it is indicative of a further dolly being coupled to the dolly 200. The threshold is determined in dependence on the use case using routine calculations and experimentation by the person skilled in the art. For example a status monitor configured for operation with a cargo dolly will have a larger threshold than a status monitor configured for operation with a baggage dolly.

### The proximity sensors

Another safety variable is whether a pedestrian or an obstacle is in proximity to the dolly. A pedestrian being in proximity to the dolly could be injured if struck by the dolly or its load. An obstacle in proximity to the dolly could cause damage to the dolly or potentially even cause a crash.

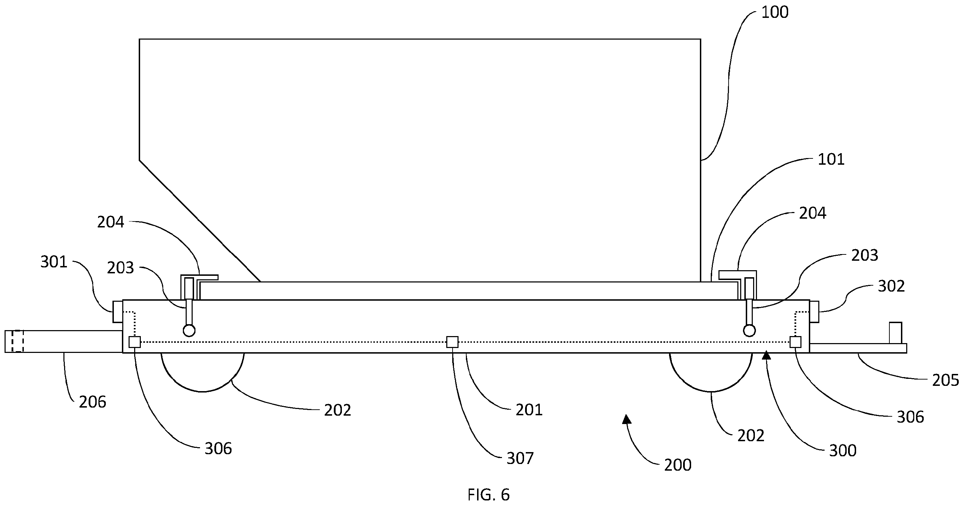

Figure 6 shows a dolly 200 and ULD 100 assembly, wherein the dolly 200 further comprises the status monitor 300. The status monitor is configured to determine the presence of an object in proximity to the dolly 200. The object may be a person or an obstacle. The status monitor 300 comprises at least one proximity sensor 307. The status monitor 300 comprises proximity sensors arranged to detect the presence of an object proximal to the dolly 200. Detection blind spots may occur in dependence on the placement of the proximity sensors 307, the field of detection of the proximity sensors 307is therefore overlapped to reduce the blind spots such that a person cannot be located within them. The proximity sensors 307 are placed on the dolly 200 at intervals so as to reduce or prevent the occurrence of sensor blind spots. In other words the proximity sensor positions allow for sensing around the entire perimeter of the dolly.

The status signal provided by the output is provided in dependence on either the detection or the proximity of a determined object or person.

### Power

A power source is incorporated into the status monitor. The power source provides power to the sensors and other components of the status monitor. The power source is a self-charging power source, for example a generator. The generator converts the mechanical energy produced from the movement of the dolly into the electrical energy which is used by the status monitor.

An energy storage apparatus is used in the status monitor to provide electrical energy for the status monitor when the dolly is not moving. The energy storage apparatus may be a capacitor or plurality of capacitors. As the sensors and other components of the status monitor have a low power draw the energy storage apparatus is operable to provide power over a time period once the dolly has stopped moving. A low power draw may be considered to be a power draw of less than approximately 100 mA. Preferably the power draw is below 10mA. In some examples the power draw is reduce to less than or equal to 1 mA. The time period is configurable in dependence on the power source and storage and may be specified in dependence on the likely use case. The length of time may be specified in order to be useful for proving function operation of the electronic components of the status monitor (e.g. up to 30 minutes, 60 minutes, 90 minutes or even longer if function is required for longer periods during non-use). Once drained, power can be resupplied to the status monitor within a short amount of time through rotation of the wheels. A short amount of time may be less than a minute, less than half a minute, less than ten seconds and in some examples less than three seconds of the dolly moving again and thereby driving the generator. In some examples power may be supplied to the status monitor via a wired connection. The wired connection provides power to the dollies from the tug or other towing vehicle.

Using a generator (or other self-charging means), configured to generate electricity sufficient to power the status monitor, allows for a smaller, and therefore lighter and less expensive, energy storage device. It also removes the requirement for the dolly to be recharged at a designated recharging station.

### The Status Monitor

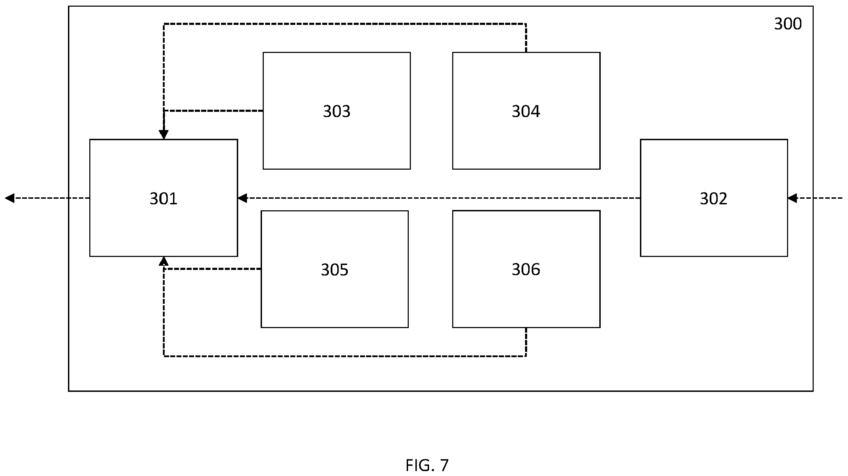

Figure 7 shows an example of the status monitor 300 comprising each of the aforementioned sensors. In other examples only a selection of the sensors may be used. Each block is also representative of one or more of said sensors. The specific number of sensors is dependent on the type of dolly the status monitor is configured for.

The status monitor is configured to provide a status signal from the output 301 in dependence on the indications of the sensors.

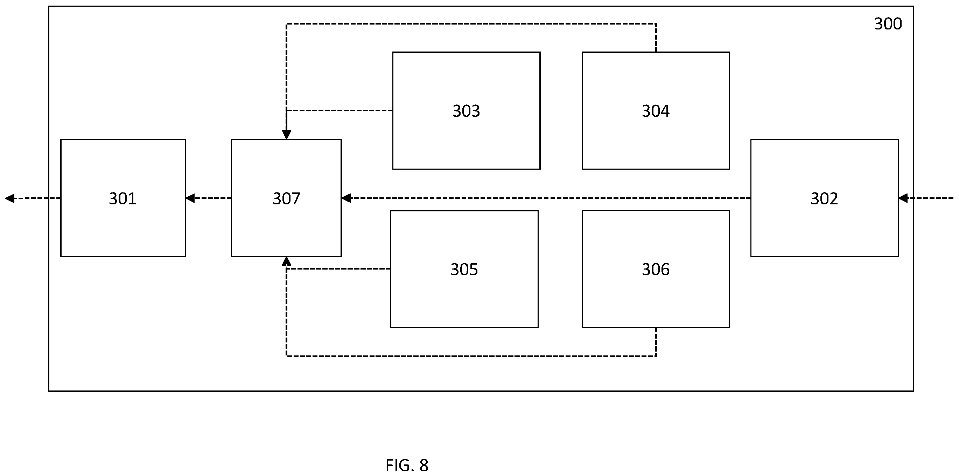

Figure 8 shows an example of the status monitor 300 further comprising a slave telemetry unit 307. The slave telemetry unit compiles the information and signals from the sensors 303, 304, 305, 306 and provides it to the output 301. The telemetry unit may also provide information to the output indicative of an identity of the dolly, such as an asset ID. The output can then provide all of this data in a single packaged status signal. The recipient of the status signal can thereby determine a complete status of the dolly to which the status monitor 300 is comprised within, and log, monitor or otherwise store that status.

### The Transport Safety System

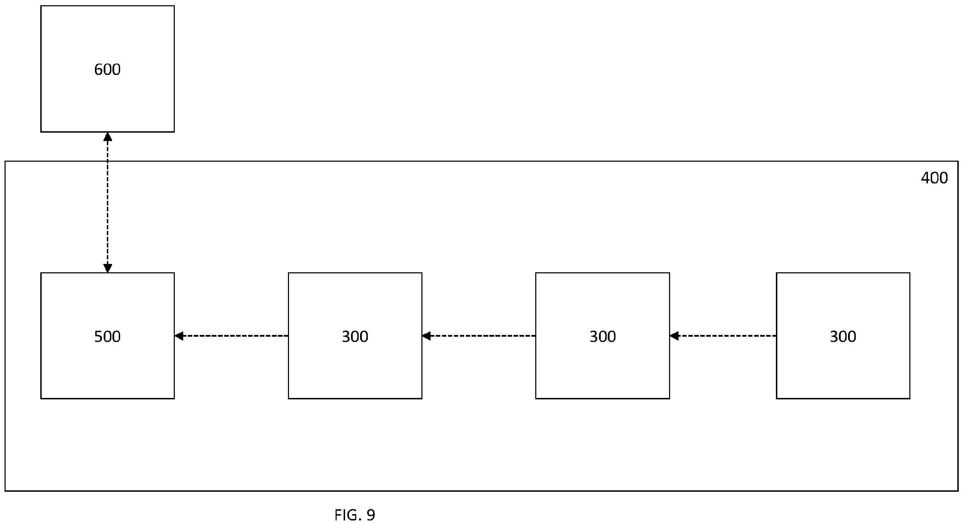

Figure 9 shows a block diagram representation of a transport safety system 400. The transport safety system comprises at least one status monitor 300 and a terminal 500. The terminal is configured to receive the status signal from the status monitor. The terminal is further configured to be retro fitted into a host vehicle, such as the driven vehicle, i.e. the tug. The terminal may comprise or be otherwise linked to a receiver. The receiver may be the same, or similar, to the receiver 302 comprised within the status monitor 300.

The terminal 500 is configured to be in communication with a master controller 600. In some examples the master controller may be comprised within the transport safety system. The terminal is configured to provide an overall status signal. The overall status signal comprises a summary of the status signals received from the status monitors 300. As the status signals comprise an asset ID for the dolly to which the status monitor is comprised within the terminal can ascertain the status of specific dollies and assign status to said dolly. Alternatively the monitoring and assignment is done at the master controller 600, which may be at a remote location.

If a negative status is reported to the terminal 500 then a warning or a vehicle shut down or immobilisation signal may be output by the terminal 500.

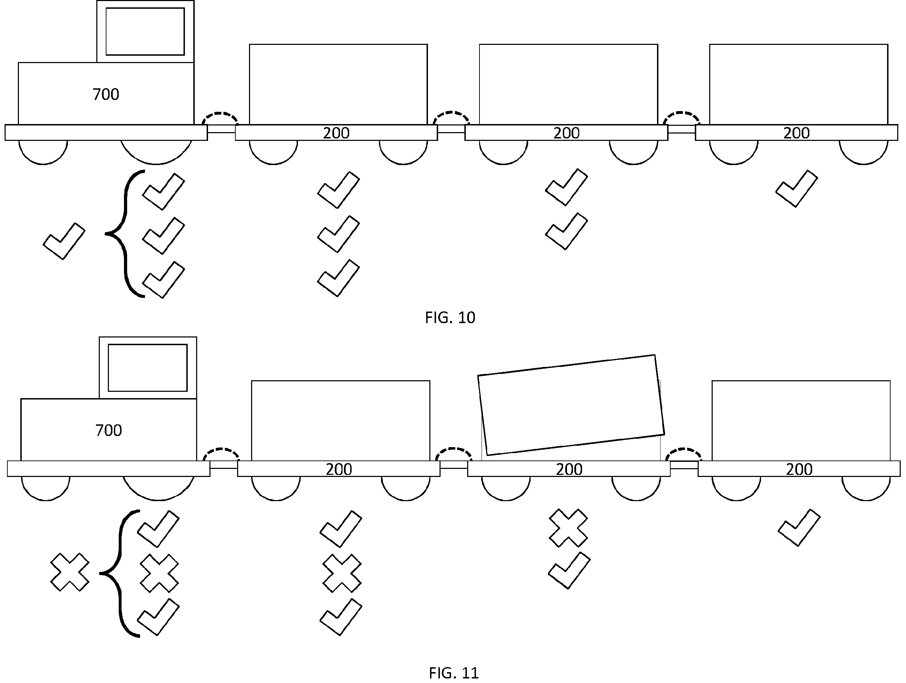

Figures 10 to 14 show simplified diagrams of vehicle trains incorporating the transport safety system 400 in various scenarios. Each dolly 200 comprises a status monitor, and is in communication with the preceding dolly 200 or towing vehicle (shown as tug 700 by way of example only) as depicted by the dashed curved lines. Figure 10 shows a vehicle train showing no errors, with Figures 11 to 14 showing various errors with one or more of the dollies. Whilst each figure shows the error occurring at a particular point in the train, this is for example only, and the error may be reported at various points in the train and result in an overall negative status.

Figure 10 provides a representation of a tug-dolly train comprising a tug 700 and three dollies 200. Each dolly 200 is equipped with a status monitor 300, the status monitors and the terminal 500, located within the tug 700, forming a transport safety system. Each status monitor is configured to provide the current safety status of its respective dolly to the preceding status monitor. The safety statuses are collated and passed along the train to the terminal. In Figure 8 there are no issues with any of the dollies and therefore an OK status signal is passed along the train to the terminal for each of the status monitors.

Figure 10 shows the vehicle train in a normal status, with no safety variables detected that may indicate an unsafe operating state of the vehicle train. The terminal 500, therefore reports a normal operating state and the safe status of each of the dollies in the train. The terminal 500 is comprised within the lead, driven vehicle - the tug 700, and the status monitors 300 are comprised within the dollies 200. Each status monitor receives the status signal from the status monitor behind it. The status monitor then adds its own status to the status signal and sends it to the next status monitor or the terminal, in dependence on its position within the train. Each status signal being passed forward (i.e. towards the lead vehicle) is therefore a concatenation of the raw status signal of the respective status monitor, plus the status signals of the following status monitors. Passing the status signal along the train in this way allows for a dolly to connect to the terminal 500 without being in direct communication with it. This means that a line of sight is not required between every dolly in the train and the lead vehicle, which is typically required to make a light based connection. Using a light based connection between the dollies provides an automatic linking, which requires no extra steps from a driver or other operator. Using a light based connection, or other directional connection (e.g. Wi-Fi (RTM) or Bluetooth (RTM) with directional antennas), or a wired connection reduces or prevents cross talk from occurring, in which the status monitor connects with another status monitor or terminal of a different vehicle train.

A tug cannot proceed and is inhibited if a dolly is detected which contains a ULD that has not been securely locked down or clamped properly. As shown in Figure 11, the status monitor in the second dolly receives an OK signal from the status monitor of the third dolly and adds a NOK (not okay) status signal to it and passes a status signal comprising the statuses of both the second and third dolly along to the first status monitor. The first status monitor then compiles all three statuses and passes the status signal to the terminal comprised within the tug. The terminal therefore reports a NOK or error overall status. Dollies with no ULD are detected and will not inhibit the tug as a NOK status only results from an unsecured load, not a lack of load.

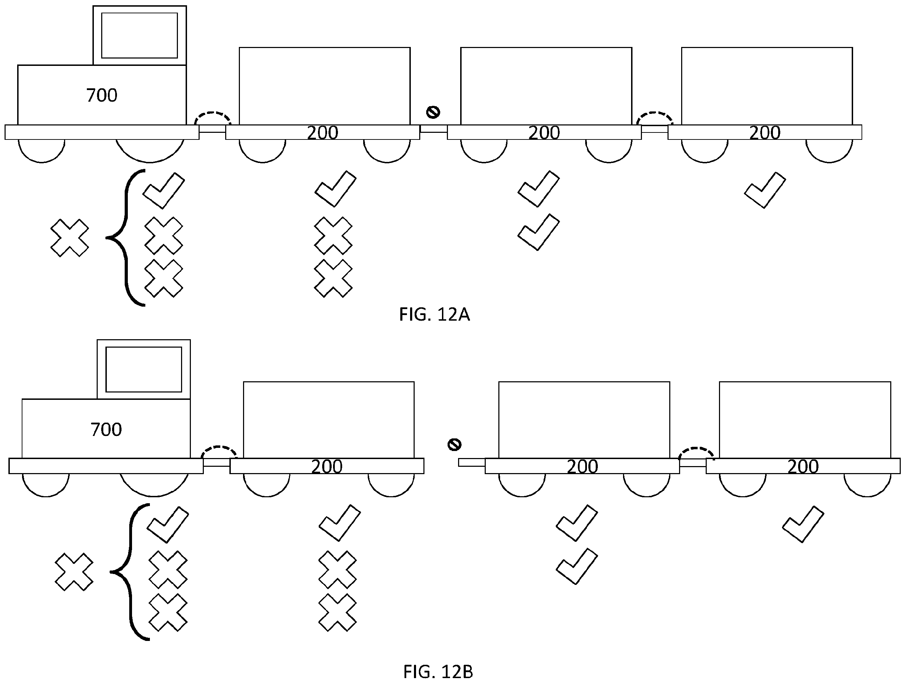

A tug cannot proceed and is inhibited if a dolly is detected as having become decoupled or unhitched. The decoupling may be a physical decoupling and/or a communication uncoupling. As shown in Figures 12A and 12B, the status monitor in the first dolly does not receive the status signals from the second and third dollies and therefore reports them as NOK or error statuses and passes a status signal comprising the statuses of all three statuses to the terminal comprised within the tug. The terminal therefore reports a NOK or error overall status. The initial train length is determined such that a loss of a signal from one or more dollies may be indicative of the loss of a dolly. Alternatively or as well, a change in the coupling sensor 305 output indicating an uncoupling of a following dolly can also be reported as a NOK or error status. In Figure 12A the physical coupling has been maintained, but the communication coupling has been lost. As the overall status can no longer determined the status of the second and third dollies their status are reported as negative. In Figure 12B the physical coupling has been lost, or never properly made. This also resorts in a similar overall status as it results in the loss of the communication coupling as well, and/or a separate coupling sensor reports the decoupling.

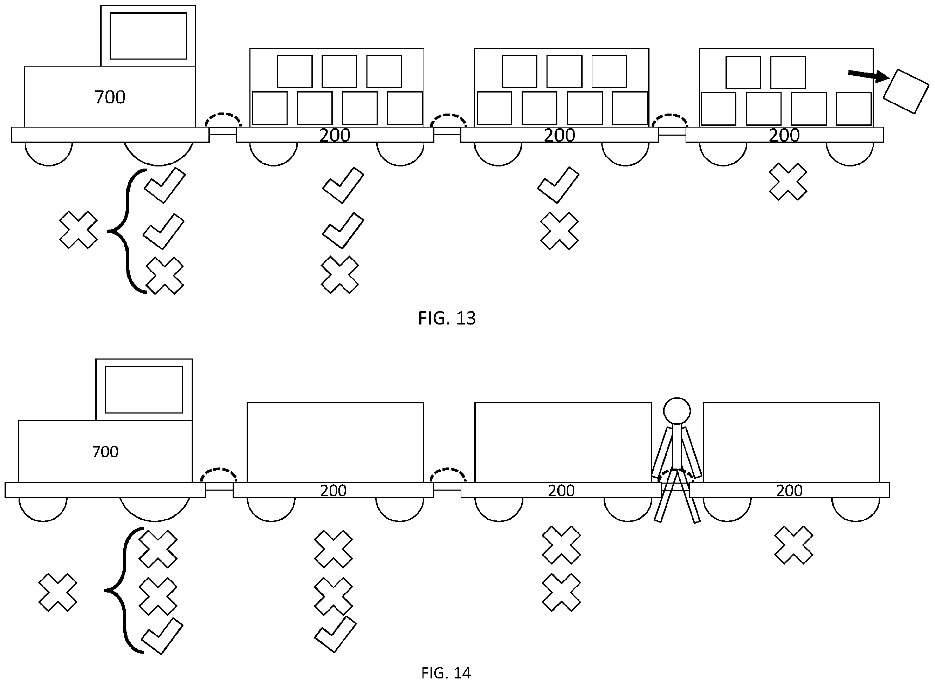

A tug cannot proceed and is inhibited if a dolly is detected that has lost at least some of the cargo or baggage it is carrying. As shown in Figure 13, the status monitor in the third dolly reports a NOK status due to a reduction in the weight detected by the weight sensors 304 resulting from a piece of cargo falling from the ULD. The status monitor in the second dolly receives a NOK signal from the status monitor of the third dolly and adds its OK status signal to it and passes a status signal comprising the statuses of both the second and third dolly along to the first status monitor. The first status monitor then compiles all three statuses and passes the status signal to the terminal comprised within the tug. The terminal therefore reports a NOK or error overall status. Dollies excessing a maximum loading weight may also be detected and also inhibit the tug.

A tug cannot proceed and is inhibited if a dolly is detected as encountering an obstruction. The obstruction may be between any constituent vehicles of a vehicle train. The obstruction may also be in a planned vehicle path, or otherwise in an overly proximal location at which the system deems the obstacle to be either a risk to the dolly, or (in situations where the obstacle is a person) that the obstacle is at risk. As shown in Figure 14, the status monitors of both the third and fourth dollies reports a NOK status due to a the proximity of a person to the dollies. The status monitor in the second dolly receives a NOK signal from the status monitor of the third dolly and adds its own NOK status signal to it and passes a status signal comprising the statuses of both the second and third dolly along to the first status monitor. The first status monitor then compiles all three statuses and passes the status signal to the terminal comprised within the tug. The terminal therefore reports a NOK or error overall status. The status monitor may determine the proximity status in dependence on a direction of travel of the vehicle train. For example, if the tug of Figure 14 was in a forwards gear then the status monitor of the second dolly would report an OK status. However, the status monitor of the third dolly would still report a NOK status, and as the tug would still be inhibited from proceeding. This scenario is as an example only. The criterion of an obstruction applies to any gap between any constituent vehicles of the vehicle train, whether that is a dolly to dolly obstruction or a tug to dolly obstruction.

Table 1 provides a status table for a selection of the various safety variables that may be sensed and reported by the status monitors. An ID status is also included, this ID status being indicative of whether the dolly is correctly identified. Where a status is labelled as "ANY" this indicates that either a positive or negative status would result in the listed overall status based on the other status criteria.

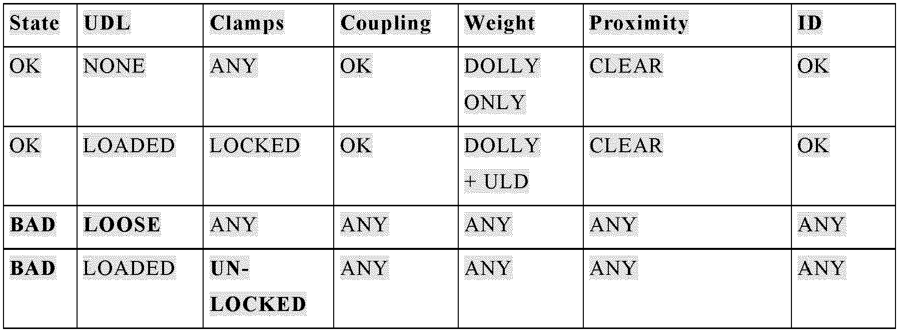

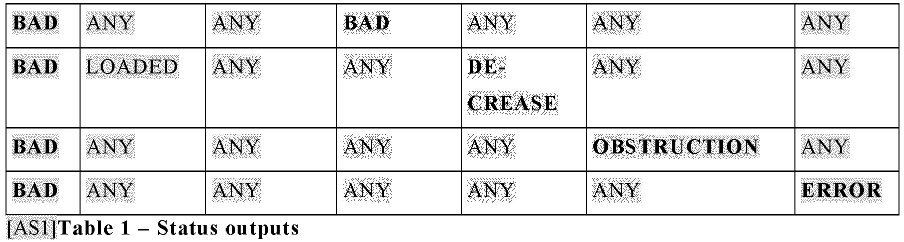

Table 2 provides a summary in binary terms of OK or NOK of the status of Table 1. This may allow a simplified signal that can be provided in less complex implementations of the transport safety system. This is an example only; the various combinations of statuses that may result in a NOK (not ok) state are numerous. In general a NOK status for any one or more factor will also results in a NOK overall status.

**Table 2 - Summary status outputs**

| **State** | **UDL** | **Clamps** | **Coupling** | **Weight** | **Proximity** | **ID** |
|---|---|---|---|---|---|---|
| OK | OK | OK | OK | OK | OK | OK |
| OK | OK | OK | OK | OK | OK | OK |
| **NOK** | **NOK** | OK | OK | OK | OK | OK |
| **NOK** | OK | **NOK** | OK | OK | OK | OK |
| **NOK** | OK | OK | **NOK** | OK | OK | OK |
| **NOK** | OK | OK | OK | **NOK** | OK | OK |
| **NOK** | OK | OK | OK | OK | **NOK** | OK |
| **NOK** | OK | OK | OK | OK | OK | **NOK** |

The information shown in the above table covers examples of information that may be transmitted by the status signal. This information can be used to either inform a warning or display system and/or be provided to a control system to modify the operation of a driven vehicle. The driven vehicle may be human or autonomously driven and may be the tug 700 or the dolly 200.

In the event of a vehicle shut down, an override may be used in order that, should a problem not be rectifiable in-situ, the dolly or tug can still be moved to a suitable location. The override may be controlled or implemented by a specific authority. The authority may be the tug driver, or a supervisor or controller. The override may be implemented through the input of an override key or code. Once the override is put in place the tug or dolly may be operated again. The operation may be in a reduced mobility mode; for example, at a reduced maximum speed. Situations where an override may be put in place might include a situation where a clamping operation has failed at a point where the dolly or tug presents an obstacle and the ULD cannot be removed safely from that location. A temporary measure may be put in place (strapping the ULD to the dolly, for example) and the authority to override may be given in order to move the dolly to a suitable location for rectification.

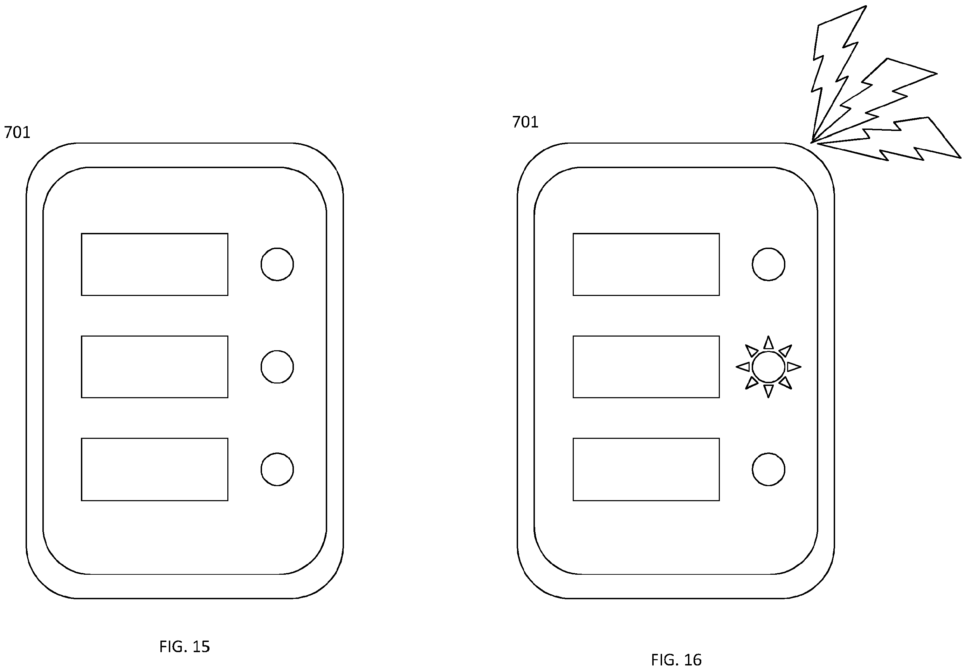

Instead, or as well as, inhibiting the tug from proceeding, a warning may be provided. Figures 15 and 16 show a status alert system 701 that may be comprised within the terminal 500. The status indicator of Figure 15 is reporting an OK status for each of the three status monitors comprised within the transport safety system. The status indicator of Figure 16 is reporting an OK status for the first and third status monitors of the transport safety system, whereas a NOK status is being reported for the second status monitor. A visual indication (in this case a flashing light) and also possibly an audible warning are provided, in order to attract a driver's attention. Further detail may be provided to the driver in the form of text or signals being provided on the status alert system 701 in the form of a display.

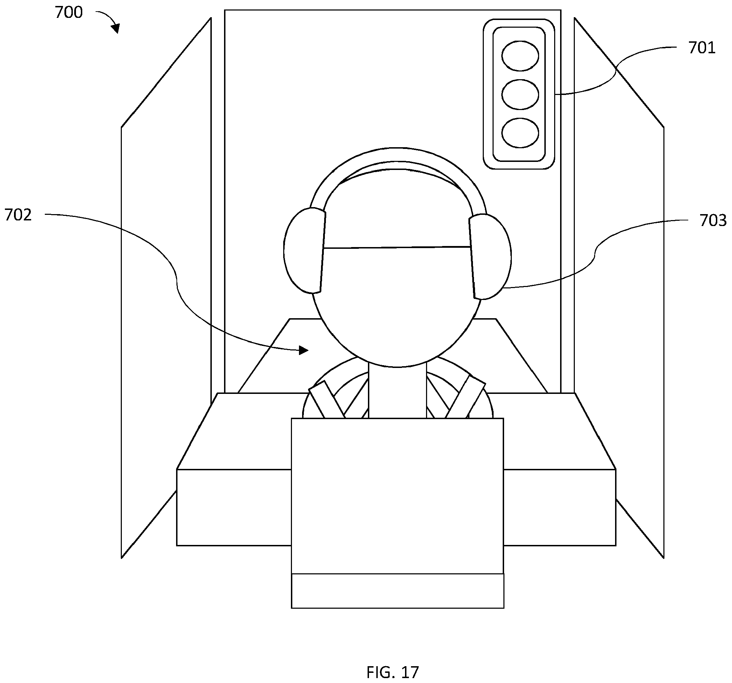

Figure 17 shows a simplified view from within a tug cabin. The terminal comprises a status alert system in the form of a display 701 comprising three lights or sub-displays, one for each dolly in the train. If all the dollies are correctly attached and reporting respective good statuses then the three lights are green. In the event of a loss of a dolly, or a bad status being reported, then the relevant light will go red. Positioning the display in a region easily visibly to the driver helps driver perception of an issue. As the driver will most likely be wearing ear defenders 703, and operating in a noisy environment, as airside at an airport often is, then a large, noticeable visual display is particularly beneficial.

The transport safety system 400 can detect empty, full or partially full ULD's / Cargo and report their weight.

The transport safety system comprises only one smart telemetry unit in the tug and one slave unit in each dolly, keeping complexity low and allowing ease of installation for retro fitting onto existing dollies and tugs. Tugs may already comprise a smart telemetry unit which can be either modified to be incorporated into the transport safety system or be replaced by a new unit.

Most tugs come fitted with GPS tracking as standard so the location of dollies can be tracked when coupled and towed. Distance covered by any dolly can be logged for better asset utilisation and fleet scheduling. `Last known location' of any dolly can be reported by the tug. Dollies can be scheduled for maintenance based on distance covered, rather than just the amount of time that has passed since a last maintenance action was carried out.

Auxiliary information can also be transmitted from the dolly. So if the ULD/cargo barcode is scanned (or the identity of a ULD is otherwise determined) then dolly and ULD combinations, position and weights can also be tracked.

The transport safety system is configured to record the history of the various parts of the system.

In known systems there is no means by which dolly usage is monitored, and some dollies may not be used at all due to unequal rotation of stock. Current servicing routines for dollies are on time based intervals. Within this interval (often about six months) one dolly may have done a few hundreds of miles whilst another may have done tens of thousands. As there is no way to track this then both dollies will be serviced, regardless of whether they really need to be or not, potentially wasting resources and increasing downtime.

Measuring the mileages that a dolly travels therefore allows for distance based servicing intervals. It can also allow for improved stock management over the prior art, as underused dollies can be identified and rotated into use.

In some examples the status monitor comprises an odometer. The odometer is configured to determine a distance travelled by the dolly, calculated in dependence on its wheel rotations.

In other examples the status monitor is not equipped with an odometer. Instead the status monitor relays its usual signals and the transport safety system calculates and records the distance travelled by the dolly based on the odometer comprised within the tug that is transporting the dolly.

In other examples the distance the dolly has travelled is determined based on GPS or other position measurement systems. These may be incorporated into either the dolly or the tug.

As the ULD is also scanned a log may be kept of the usage of the ULDs. Usage may be recorded as number of clamping events. Other data may be the number of failed clamping events. Whilst a single failed clamping may be due to user error, multiple may be indicative of a warped ULD. A ULD having more than a threshold number of failures may therefore result in an alert in the transport safety system 400 to retire, replace, or mend said ULD.

The transport safety system may also be configured to monitor vehicle users. If multiple errors are determined from particular user then the user can be provided with further training, thereby reducing user error and possibilities of injury and down time.

### Retro fitting

The status monitor 300 and any of the systems that form a part of the dolly 200 depicted in the Figures can be provided as retro-fit systems that can be fitted to a pre-existing dolly. By retro-fitting the status monitor the advantage of the status monitor of each system can be provided to a pre-existing dolly. Moreover, it will be known that many airport baggage and cargo handling systems have many tens, hundreds, or even a thousand or more of pre-existing airside dollies and that therefore it is desirable to utilise these pre-existing dollies when looking to provide a dolly comprising a status monitor and/or a transport safety system described in the present disclosure.

The method of retro-fitting the airside dolly may include fitting any one or multiple systems as described previously in the present disclosure. Where necessary, it will be apparent that it is necessary to modify parts of the pre-existing airside dolly in order to enable the airside dolly to be retro-fitted with any given system.

In another example, the retro-fitting of the various sensors comprise as part of the status monitor 300 may require the drilling of holes to house the sensors or the addition of parts to support the sensors, such as the addition of mounting brackets. Therefore, retro-fitting of any of the systems may require adaptation of the pre-existing airside dolly, dependent on the specific features of the pre-existing airside dolly.

However, many features of the pre-existing airside dolly may be utilised in the retro-fitted systems. For example, the wheels 202 and chassis 201 may be retained and a pre-existing locking system and it its component clamps 204 and levers 203 may be adapted to provide an automated locking system in accordance with the present disclosure.

### Caveats

Whilst the preceding examples have been described for use with, or to be incorporated within, conventional airside dollies that are towed by manned tugs, the status monitor and transport safety system can also be used with non-conventional airside dollies. For example, the status monitor can be fitted to or incorporated within a self-propelled dolly, autonomous dolly, autonomous tug, or remote controlled tug or dolly.

Each concept discussed in the present disclosure, except where otherwise provided, may be utilised independently or in combination with any other concept discussed. The skilled person will understand that the specific examples discussed are simply embodiments of the discussed concepts for illustrative purposes and that combinations disclosed in relation to one specific example are not intended to limit the different combinations that could be provided.

## Claims

1. An airside dolly (200) and a driven vehicle (700), wherein the airside dolly (200) comprises a status monitor (300), and wherein the driven vehicle (700) is a towing vehicle (700), such as a tug (700), configured to tow the airside dolly (200), the status monitor (300) comprising:
a sensor (303, 304, 305, 306, 307), the sensor (303, 304, 305, 306, 307) configured to sense a safety variable of the airside dolly (200); and
an output (301), the output (301) being in communication with the sensor (303, 304, 305, 306, 307) and configured to provide a status signal in dependence on the sensed safety variable of the airside dolly (200);
**characterized in that**
the status signal is configured to trigger a shutdown or immobilisation of the driven vehicle (700) in dependence on the safety status of the airside dolly (200).

2. An airside dolly (200) and a driven vehicle (700) according to claim 1 wherein the sensor (303, 304, 305, 306, 307) comprises a clamp sensor (303), wherein the clamp sensor (303) is configured to sense whether a ULD (100) or other container is correctly clamped to the airside dolly (200), and wherein the safety variable is whether a ULD (100) or other container is correctly clamped to the airside dolly (200).

3. An airside dolly (200) and a driven vehicle (700) according to claim 1 or claim 2 wherein the sensor (303, 304, 305, 306, 307) comprises a weight sensor (304), wherein the weight sensor (304) is configured to sense a weight, or change in weight, of cargo being transported by the airside dolly (200), and wherein the safety variable is whether there is a change in weight of the cargo during transportation.

4. An airside dolly (200) and a driven vehicle (700) according to any preceding claim wherein the sensor (303, 304, 305, 306, 307) comprises a coupling sensor (305), wherein the coupling sensor is configured to sense whether a further airside dolly (200) is coupled to the airside dolly (200), and wherein the safety variable is whether the further airside dolly (200) has become decoupled from the airside dolly (200).

5. An airside dolly (200) and a driven vehicle (700) according to any preceding claim wherein the sensor (303, 304, 305, 306, 307) comprises a proximity sensor (307), wherein the proximity sensor (307) is configured to sense whether an object, person or obstacle is proximal to the airside dolly (200), and wherein the safety variable is whether an object, person or obstacle is in a position at which it might be struck by the airside dolly (200).

6. An airside dolly (200) and a driven vehicle (700) according to any preceding claim, wherein the status monitor (300) further comprises a communication input (302), and wherein the communication input (302) is configured to receive a status signal from an output of a further status monitor (300), the further status monitor (300) comprising a sensor (303, 304, 305, 306, 307) configured to sense a safety variable of a further airside dolly (200), the output of the further status monitor (300) being in communication with the sensor (303, 304, 305, 306, 307) of the further status monitor (300) and configured to provide a status signal in dependence on the sensed safety variable of the further airside dolly (200), and preferably wherein the status monitor (300) is configured to generate and output a concatenated status signal, wherein the concatenated status signal comprises the status signal of the status monitor (300) and the status signal of the further status monitor (300).

7. A vehicle train comprising an airside dolly (200) and a driven vehicle (700) according to any preceding claim, wherein the status signal is output to a tug (700) and/or a further airside dolly (200) comprised within the vehicle train.

8. A transport safety system (400) comprising the airside dolly (200) and the driven vehicle (700) of any one of claims 1 to 6 and a terminal (500), wherein the terminal (500) is configured to receive the status signal, and preferably wherein the terminal (500) is located in at least one of: a tug cabin, a control room, and a mobile device, and preferably wherein the transport safety system (400) comprises a plurality of status monitors (300), wherein each status monitor (300) is associated with a respective airside dolly (200).

9. A transport safety system (400) according to claim 8, wherein the terminal (500) comprises a status alert system (701), and preferably wherein the status alert system (701) is configured to provide an indicator in dependence on the or each status signal, wherein the indicator is at least one of: a visual indicator, and an audible indicator, and wherein the indicator is preferably provided to a driver of a tug (700), and preferably wherein the indicator comprises a visual indicator in the form of a display, and wherein the display comprises a sub-display or status light indicative of the status of an airside dolly for each airside dolly comprised within a train.

10. A transport safety system (400) according to claim 8 or claim 9 further comprising an override means, wherein the override means is configured to allow an authorised user to at least partially override the shut-down or immobilisation of the driven vehicle (700).

11. A transport safety system (400) according to any one of claims 8 to 10 wherein the terminal (500) is configured to output an overall status signal, wherein the overall status signal is indicative of the or each status signal received at the terminal (500), and preferably wherein the terminal (500) is located in a tug (700) and the overall status signal is output to a master controller (600), wherein the master controller (600) is at a location remote to the terminal (500) and the overall status signal further comprises a status of the tug (700).

12. A method of triggering a shutdown or immobilisation of a driven vehicle (700), wherein the driven vehicle (700) is a towing vehicle (700), such as a tug (700), configured to tow an airside dolly (200), the method comprising:
sensing a safety variable of the airside dolly (200); and
outputting a status signal in dependence on the sensed safety variable; wherein
the status signal is configured to trigger the w shutdown or immobilisation of the driven vehicle (700) in dependence on the safety status of the airside dolly (200).

13. A method of retro-fitting an airside dolly (200) of a system comprising the airside dolly (200) and a driven vehicle (700), wherein the driven vehicle (700) is a towing vehicle (700), such as a tug (700), configured to tow the airside dolly (200), to improve the operational safety of the airside dolly (200) and the driven vehicle (700), the method comprising:
fitting a sensor (303, 304, 305, 306, 307) configured to sense a safety variable of the airside dolly (200); and
fitting an output (301) configured to be in communication with the sensor (303, 304, 305, 306, 307) and further configured to provide a status signal in dependence on the sensed safety variable of the airside dolly (200); wherein
the status signal is configured to trigger a shutdown or immobilisation of the driven vehicle (700) in dependence on the safety status of the airside dolly (200).

## Patentansprüche

1. Transportwagen (200) für die Luftseite und angetriebenes Fahrzeug (700), wobei der Transportwagen (200) für die Luftseite einen Statusmonitor (300) umfasst, und wobei das angetriebene Fahrzeug (700) ein Zugfahrzeug (700) wie etwa ein Schlepper (700) ist, das dazu ausgestaltet ist, den Transportwagen (200) für die Luftseite zu ziehen, wobei der Statusmonitor (300) umfasst:
einen Sensor (303, 304, 305, 306, 307), wobei der Sensor (303, 304, 305, 306, 307) dazu ausgestaltet ist, eine Sicherheitsvariable des Transportwagens (700) für die Luftseite zu erfassen; und
eine Ausgabe (301), wobei die Ausgabe (301) mit dem Sensor (303, 304, 305, 306, 307) in Kommunikationsverbindung steht und dazu ausgestaltet ist, ein Statussignal abhängig von der erfassten Sicherheitsvariable des Transportwagens (200) für die Luftseite bereitzustellen;
**dadurch gekennzeichnet, dass**
das Statussignal dazu ausgestaltet ist, ein Ausschalten oder Anhalten des angetriebenen Fahrzeugs (700) abhängig von dem Sicherheitsstatus des Transportwagens (200) für die Luftseite auszulösen.

2. Transportwagen (200) für die Luftseite und angetriebenes Fahrzeug (700) nach Anspruch 1, wobei der Sensor (303, 304, 305, 306, 307) einen Klemmsensor (303) umfasst, wobei der Klemmsensor (303) dazu ausgestaltet ist, zu erfassen, ob ein ULD (100) oder ein anderer Container korrekt an dem Transportwagen (200) für die Luftseite festgeklemmt ist, und wobei die Sicherheitsvariable darin besteht, ob ein ULD (100) oder anderer Container korrekt an dem Transportwagen (200) für die Luftseite festgeklemmt ist.

3. Transportwagen (200) für die Luftseite und angetriebenes Fahrzeug (700) nach Anspruch 1 oder Anspruch 2, wobei der Sensor (303, 304, 305, 306, 307) einen Gewichtssensor (304) umfasst, wobei der Gewichtssensor (304) dazu ausgestaltet ist, ein Gewicht oder eine Veränderung eines Gewichts einer Fracht zu erfassen, die von dem Transportwagen (200) für die Luftseite transportiert wird, und wobei die Sicherheitsvariable darin besteht, ob eine Veränderung des Gewichts der Fracht während des Transports vorliegt.

4. Transportwagen (200) für die Luftseite und angetriebenes Fahrzeug (700) nach einem vorstehenden Anspruch, wobei der Sensor (303, 304, 305, 306, 307) einen Kupplungssensor (305) umfasst, wobei der Kupplungssensor dazu ausgestaltet ist, zu erfassen, ob ein weiterer Transportwagen (200) für die Luftseite an den Transportwagen (200) für die Luftseite gekuppelt ist, und wobei die Sicherheitsvariable darin besteht, ob der weitere Transportwagen (200) für die Luftseite von dem Transportwagen (200) für die Luftseite entkuppelt wurde.

5. Transportwagen (200) für die Luftseite und angetriebenes Fahrzeug (700) nach einem vorstehenden Anspruch, wobei der Sensor (303, 304, 305, 306, 307) einen Annäherungssensor (307) umfasst, wobei der Annäherungssensor (307) dazu ausgestaltet ist, zu erfassen, ob sich ein Objekt, eine Person oder ein Hindernis in der Nähe des Transportwagens (200) für die Luftseite befindet, und wobei die Sicherheitsvariable darin besteht, ob sich ein Objekt, eine Person oder ein Hindernis in einer Position befindet, in der es oder sie mit dem Transportwagen (200) für die Luftseite kollidieren könnte.

6. Transportwagen (200) für die Luftseite und angetriebenes Fahrzeug (700) nach einem vorstehenden Anspruch, wobei der Statusmonitor (300) ferner einen Kommunikationseingang (302) umfasst, und wobei der Kommunikationseingang (302) dazu ausgestaltet ist, ein Statussignal von einer Ausgabe eines weiteren Statusmonitors (300) zu empfangen, wobei der weitere Statusmonitor (300) einen Sensor (303, 304, 305, 306, 307) umfasst, der dazu ausgestaltet ist, eine Sicherheitsvariable eines weiteren Transportwagens (200) für die Luftseite zu erfassen, wobei die Ausgabe des weiteren Statusmonitors (300) mit dem Sensor (303, 304, 305, 306, 307) des weiteren Statusmonitors (300) in Kommunikationsverbindung steht und dazu ausgestaltet ist, ein Statussignal abhängig von der erfassten Sicherheitsvariable des weiteren Transportwagens (200) für die Luftseite bereitzustellen, und vorzugsweise wobei der Statusmonitor (300) dazu ausgestaltet ist, ein verkettetes Statussignal zu erzeugen und auszugeben, wobei das verkettete Statussignal das Statussignal des Statusmonitors (300) und das Statussignal des weiteren Statusmonitors (300) umfasst.

7. Fahrzeugzug, der einen Transportwagen (200) für die Luftseite und ein angetriebenes Fahrzeug (700) nach einem vorstehenden Anspruch umfasst, wobei das Statussignal an einen Schlepper (700) und/oder einen weiteren Transportwagen (200) für die Luftseite, der von dem Fahrzeugzug umfasst ist, ausgegeben wird.

8. Transportsicherheitssystem (400), das den Transportwagen (200) für die Luftseite und das angetriebene Fahrzeug (700) nach einem der Ansprüche 1 bis 6 und ein Terminal (500) umfasst, wobei das Terminal (500) dazu ausgestaltet ist, das Statussignal zu empfangen, und vorzugsweise wobei sich das Terminal (500) in zumindest einem befindest aus: einer Schlepperkabine, einem Kontrollraum und einem Mobilgerät, und vorzugsweise wobei das Transportsicherheitssystem (400) eine Mehrzahl von Statusmonitoren (300) umfasst, wobei jeder Statusmonitor (300) einem jeweiligen Transportwagen (200) für die Luftseite zugehörig ist.

9. Transportsicherheitssystem (400) nach Anspruch 8, wobei das Terminal (500) ein Statuswarnsystem (701) umfasst, und vorzugsweise wobei das Statuswarnsystem (701) dazu ausgestaltet ist, einen Anzeiger abhängig von dem oder jedem Statussignal bereitzustellen, wobei der Anzeiger zumindest eines ist aus: einem visuellen Anzeiger und einem akustischen Anzeiger, und wobei der Anzeiger vorzugsweise an einen Fahrer eines Schleppers (700) bereitgestellt wird, und vorzugsweise wobei der Anzeiger einen visuellen Anzeiger in Form einer Anzeige umfasst, und wobei die Anzeige eine Unteranzeige oder ein Statuslicht, die bzw. das den Status eines Transportwagens für die Luftseite anzeigt, für jeden Transportwagen für die Luftseite umfasst, der in einem Zug umfasst ist.

10. Transportsicherheitssystem (400) nach Anspruch 8 oder 9, das ferner ein Überschreibungsmittel umfasst, wobei das Überschreibungsmittel dazu ausgestaltet ist, einem berechtigten Benutzer zu ermöglichen, das Ausschalten oder Anhalten des angetriebenen Fahrzeugs (700) zumindest teilweise zu überschreiben.

11. Transportsicherheitssystem (400) nach einem der Ansprüche 8 bis 10, wobei das Terminal (500) dazu ausgestaltet ist, ein allgemeines Statussignal auszugeben, wobei das allgemeine Statussignal das oder jedes Statussignal anzeigt, das an dem Terminal (500) empfangen wird, und vorzugsweise wobei sich das Terminal (500) in einem Schlepper (700) befindet und das allgemeine Statussignal an eine Hauptsteuerung (600) ausgegeben wird, wobei sich die Hauptsteuerung (600) an einem Ort befindet, der von dem Terminal (500) entfernt liegt, und das allgemeine Statussignal ferner einen Status des Schleppers (700) umfasst.

12. Verfahren zum Auslösen eines Ausschaltens oder Anhaltens eines angetriebenen Fahrzeugs (700), wobei das angetriebene Fahrzeug (700) ein Zugfahrzeug (700) wie etwa ein Schlepper (700) ist, das dazu ausgestaltet ist, einen Transportwagen (200) für die Luftseite zu ziehen, wobei das Verfahren umfasst:
Erfassen einer Sicherheitsvariable des Transportwagens (200) für die Luftseite; und
Ausgeben eines Statussignals abhängig von der erfassten Sicherheitsvariable;
wobei
das Statussignal dazu ausgestaltet ist, das Ausschalten oder Anhalten des angetriebenen Fahrzeugs (700) abhängig von dem Sicherheitsstatus des Transportwagens (200) für die Luftseite auszulösen.

13. Verfahren zum Nachrüsten eines Transportwagens (200) für eine Luftseite eines Systems, das den Transportwagen (200) für die Luftseite und ein angetriebenes Fahrzeug (700) umfasst, wobei das angetriebene Fahrzeug (700) ein Zugfahrzeug (700) wie etwa ein Schlepper (700) ist, das dazu ausgestaltet ist, den Transportwagen (200) für die Luftseite zu ziehen, um die Betriebssicherheit des Transportwagens (200) für die Luftseite und des angetriebenen Fahrzeugs (700) zu verbessern, wobei das Verfahren umfasst:
Montieren eines Sensors (303, 304, 305, 306, 307), der dazu ausgestaltet ist, eine Sicherheitsvariable des Transportwagens (200) für die Luftsicherheit zu erfassen; und
Montieren einer Ausgabe (301), die dazu ausgestaltet ist, mit dem Sensor (303, 304, 305, 306, 307) in Kommunikationsverbindung zu stehen, und ferner dazu ausgestaltet ist, ein Statussignal abhängig von der erfassten Sicherheitsvariable des Transportwagens (200) für die Luftseite bereitzustellen, wobei
das Statussignal dazu ausgestaltet ist, ein Ausschalten oder Anhalten des angetriebenen Fahrzeugs (700) abhängig von dem Sicherheitsstatus des Transportwagens (200) für die Luftseite auszulösen.

## Revendications

1. Chariot aéroportuaire (200) et véhicule entraîné (700), dans lesquels le chariot aéroportuaire (200) comprend un moniteur d'état (300), et dans lesquels le véhicule entraîné (700) est un véhicule de remorquage (700), tel qu'un remorqueur (700), configuré pour remorquer le chariot aéroportuaire (200), le moniteur d'état (300) comprenant :
un capteur (303, 304, 305, 306, 307), le capteur (303, 304, 305, 306, 307) étant configuré pour détecter une variable de sécurité du chariot aéroportuaire (200) ; et
une sortie (301), la sortie (301) étant en communication avec le capteur (303, 304, 305, 306, 307) et configurée pour fournir un signal d'état en fonction de la variable de sécurité détectée du chariot aéroportuaire (200) ;
**caractérisé en ce que**
le signal d'état est configuré pour déclencher un arrêt ou une immobilisation du véhicule entraîné (700) en fonction de l'état de sécurité du chariot aéroportuaire (200).

2. Chariot aéroportuaire (200) et véhicule entraîné (700) selon la revendication 1, dans lesquels le capteur (303, 304, 305, 306, 307) comprend un capteur à pince (303), dans lesquels le capteur à pince (303) est configuré pour détecter si un ULD (100) ou un autre conteneur est correctement fixé au chariot aéroportuaire (200), et dans lesquels la variable de sécurité indique si un ULD (100) ou un autre conteneur est correctement fixé au chariot aéroportuaire (200).

3. Chariot aéroportuaire (200) et véhicule entraîné (700) selon la revendication 1 ou la revendication 2, dans lesquels le capteur (303, 304, 305, 306, 307) comprend un capteur de poids (304), dans lesquels le capteur de poids (304) est configuré pour détecter un poids, ou un changement de poids, d'une cargaison étant transportée par le chariot aéroportuaire (200), et dans lesquels la variable de sécurité indique s'il y a un changement de poids de la cargaison pendant le transport.

4. Chariot aéroportuaire (200) et véhicule entraîné (700) selon une quelconque revendication précédente, dans lesquels le capteur (303, 304, 305, 306, 307) comprend un capteur de couplage (305), dans lesquels le capteur de couplage est configuré pour détecter si un autre chariot aéroportuaire (200) est couplé au chariot aéroportuaire (200), et dans lesquels la variable de sécurité indique si l'autre chariot aéroportuaire (200) s'est découplé du chariot aéroportuaire (200).

5. Chariot aéroportuaire (200) et véhicule entraîné (700) selon une quelconque revendication précédente, dans lesquels le capteur (303, 304, 305, 306, 307) comprend un capteur de proximité (307), dans lesquels le capteur de proximité (307) est configuré pour détecter si un objet, une personne ou un obstacle se trouve à proximité du chariot aéroportuaire (200), et dans lesquels la variable de sécurité indique si un objet, une personne ou un obstacle se trouve dans une position dans laquelle il pourrait être heurté par le chariot aéroportuaire (200) .

6. Chariot aéroportuaire (200) et véhicule entraîné (700) selon une quelconque revendication précédente, dans lesquels le moniteur d'état (300) comprend également une entrée de communication (302), et dans lesquels l'entrée de communication (302) est configurée pour recevoir un signal d'état à partir d'une sortie d'un autre moniteur d'état (300), l'autre moniteur d'état (300) comprenant un capteur (303, 304, 305, 306, 307) configuré pour détecter une variable de sécurité d'un autre chariot aéroportuaire (200), la sortie de l'autre moniteur d'état (300) étant en communication avec le capteur (303, 304, 305, 306, 307) de l'autre moniteur d'état (300) et configurée pour fournir un signal d'état en fonction de la variable de sécurité détectée de l'autre chariot aéroportuaire (200), et de préférence dans lesquels le moniteur d'état (300) est configuré pour générer et émettre un signal d'état concaténé, dans lesquels le signal d'état concaténé comprend le signal d'état du moniteur d'état (300) et le signal d'état de l'autre moniteur d'état (300).

7. Train de véhicules comprenant un chariot aéroportuaire (200) et un véhicule entraîné (700) selon une quelconque revendication précédente, dans lequel le signal d'état est émis vers un remorqueur (700) et/ou un autre chariot aéroportuaire (200) compris dans le train de véhicules.

8. Système de sécurité des transports (400) comprenant le chariot aéroportuaire (200) et le véhicule entraîné (700) selon l'une quelconque des revendications 1 à 6 et un terminal (500), dans lequel le terminal (500) est configuré pour recevoir le signal d'état, et de préférence dans lequel le terminal (500) est situé dans au moins l'un : d'une cabine de remorqueur, d'une salle de commande et d'un dispositif mobile, et de préférence dans lequel le système de sécurité des transports (400) comprend une pluralité de moniteurs d'état (300), dans lequel chaque moniteur d'état (300) est associé à un chariot aéroportuaire respectif (200).

9. Système de sécurité des transports (400) selon la revendication 8, dans lequel le terminal (500) comprend un système d'alerte d'état (701), et de préférence dans lequel le système d'alerte d'état (701) est configuré pour fournir un indicateur en fonction du ou de chaque signal d'état, dans lequel l'indicateur est au moins l'un : d'un indicateur visuel et d'un indicateur sonore, et dans lequel l'indicateur est de préférence fourni à un conducteur d'un remorqueur (700), et de préférence dans lequel l'indicateur comprend un indicateur visuel sous la forme d'un affichage, et dans lequel l'affichage comprend un sous-affichage ou un voyant d'état indicatif de l'état d'un chariot aéroportuaire pour chaque chariot aéroportuaire compris dans un train.

10. Système de sécurité des transports (400) selon la revendication 8 ou la revendication 9, comprenant également un moyen d'annulation, dans lequel le moyen d'annulation est configuré pour permettre à un utilisateur autorisé d'annuler au moins partiellement l'arrêt ou l'immobilisation du véhicule entraîné (700).

11. Système de sécurité des transports (400) selon l'une quelconque des revendications 8 à 10, dans lequel le terminal (500) est configuré pour émettre un signal d'état global, dans lequel le signal d'état global est indicatif du ou de chaque signal d'état reçu au niveau du terminal (500), et de préférence dans lequel le terminal (500) est situé dans un remorqueur (700) et le signal d'état global est émis vers un dispositif de commande maître (600), dans lequel le dispositif de commande maître (600) se trouve au niveau d'un emplacement éloigné du terminal (500) et le signal d'état global comprend également un état du remorqueur (700).

12. Procédé de déclenchement d'un arrêt ou d'une immobilisation d'un véhicule entraîné (700), dans lequel le véhicule entraîné (700) est un véhicule de remorquage (700), tel qu'un remorqueur (700), configuré pour remorquer un chariot aéroportuaire (200), le procédé comprenant :
la détection d'une variable de sécurité du chariot aéroportuaire (200) ; et
l'émission d'un signal d'état en fonction de la variable de sécurité détectée ; dans lequel
le signal d'état est configuré pour déclencher l'arrêt ou l'immobilisation du véhicule entraîné (700) en fonction de l'état de sécurité du chariot aéroportuaire (200).

13. Procédé de modernisation d'un chariot aéroportuaire (200) d'un système comprenant le chariot aéroportuaire (200) et un véhicule entraîné (700), dans lequel le véhicule entraîné (700) est un véhicule de remorquage (700), tel qu'un remorqueur (700), configuré pour remorquer le chariot aéroportuaire (200), afin d'améliorer la sécurité opérationnelle du chariot aéroportuaire (200) et du véhicule entraîné (700), le procédé comprenant :
l'installation d'un capteur (303, 304, 305, 306, 307) configuré pour détecter une variable de sécurité du chariot aéroportuaire (200) ; et
l'installation d'une sortie (301) configurée pour être en communication avec le capteur (303, 304, 305, 306, 307) et configurée en outre pour fournir un signal d'état en fonction de la variable de sécurité détectée du chariot aéroportuaire (200) ; dans lequel
le signal d'état est configuré pour déclencher un arrêt ou une immobilisation du véhicule entraîné (700) en fonction de l'état de sécurité du chariot aéroportuaire (200).
